# EUROPEAN PATENT APPLICATION

(11) **EP 4 583 248 A1**
(43) Date of publication of application: **09.07.2025**
(21) Application number: 23890171.4
(22) Date of filing: 25.06.2023
(51) Int. Cl.: H01M 10/613, H01M 10/627, H01M 10/6556, H01M 50/30

(54) **BATTERY MODULE, ENERGY STORAGE CABINET, AND ENERGY STORAGE SYSTEM**

(30) Priority: 16.11.2022 CN 202211438198
(71) Applicant: Huawei Digital Power Technologies Co., Ltd., Shenzhen, Guangdong 518043 (CN)
(72) Inventor: CHEN, Shaozhen, Shenzhen, Guangdong 518043 (CN); ZHOU, Jianbing, Shenzhen, Guangdong 518043 (CN); LIU, Chengyong, Shenzhen, Guangdong 518043 (CN); DENG, Xiaoyi, Shenzhen, Guangdong 518043 (CN); CHEN, Cheng, Shenzhen, Guangdong 518043 (CN)
(74) Representative: Isarpatent
(86) International application number: PCT/CN2023/102167
(87) International publication number: WO 2024/103729

(57) **Abstract**

This application discloses a battery module, an energy storage cabinet, and an energy storage system, to reduce a risk of thermal runaway diffusion and improve use safety of the battery module. The battery module includes a housing, and a plurality of battery cells and a first exhaust pipe that are disposed in the housing. The housing is provided with a first vent. The battery cell includes a battery cover and an explosion-proof valve, the battery cover is provided with a through hole, and the explosion-proof valve is configured to block the through hole. The first exhaust pipe communicates with an outside of the housing through the first vent, the first exhaust pipe is provided with an inlet communicating with the through hole of each battery cell, each inlet is covered with a heat-resistant film, and opening pressure of the heat-resistant film is less than opening pressure of the explosion-proof valve.

## Description

### CROSS-REFERENCE TO RELATED APPLICATIONS

This application claims priority to Chinese Patent Application No. 202211438198.2, filed with the China National Intellectual Property Administration on November 16, 2022 and entitled "BATTERY MODULE, ENERGY STORAGE CABINET, AND ENERGY STORAGE SYSTEM", which is incorporated herein by reference in its entirety.

### TECHNICAL FIELD

This application relates to the field of electronic device technologies, and in particular, to a battery module, an energy storage cabinet, and an energy storage system.

### BACKGROUND

An energy storage system may be used as a load balancing apparatus and a backup power supply in a data center, to supply power to electronic devices such as a server and a supercomputer. The energy storage system may be usually disposed in a container or an equipment room, and may include a plurality of energy storage cabinets. Each energy storage cabinet may include a plurality of battery modules, and each battery module may be formed by connecting a plurality of battery cells. Lithium iron phosphate is commonly used for battery cells in the energy storage cabinet. There is a probability of a thermal runaway risk during use of the battery cells. In addition, a thermal runaway diffusion prevention solution is basically not used for current lithium battery energy storage products. If thermal runaway occurs in one battery cell, heat is quickly transferred to an adjacent battery cell, causing thermal runaway to occur in the adjacent battery cell. Once heat is diffused, thermal runaway occurs in the entire battery module and even the entire energy storage cabinet in succession, seriously affecting use safety of the energy storage system.

### SUMMARY

This application provides a battery module, an energy storage cabinet, and an energy storage system, to reduce a risk of thermal runaway diffusion and improve use safety of the battery module.

According to a first aspect, this application provides a battery module, where the battery module may include a housing, a plurality of battery cells, and a first exhaust pipe, the plurality of battery cells and the first exhaust pipe are disposed in the housing, and the housing may be provided with a first vent. The battery cell may include a battery cover and an explosion-proof valve, the battery cover is provided with a through hole, the through hole may enable communication between the inside of the battery cell and the outside, and the explosion-proof valve covers the through hole and blocks the through hole. The first exhaust pipe may communicate with an outside of the housing through the first vent, the first exhaust pipe is provided with an inlet communicating with the through hole of each battery cell, each inlet is covered with a heat-resistant film, and opening pressure of the heat-resistant film is less than opening pressure of the explosion-proof valve. In this way, after the explosion-proof valve is opened under pressure inside the battery cell, the pressure definitely opens the heat-resistant film, so that high-temperature gas inside the battery cell smoothly enters the first exhaust pipe, and is discharged to the outside of the housing through the first exhaust pipe, thereby reducing heat diffusion inside the housing. In addition, for the entire battery module, even if one or more battery cells in the same battery module are faulty and discharge gas to the first exhaust pipe, when high-temperature gas in the first exhaust pipe flows through a normal battery cell, the heat-resistant film can reduce heat transferred by the high-temperature gas to the normal battery cell through the inlet, thereby effectively reducing a risk of thermal runaway diffusion and improving use safety of the battery module.

In some possible implementation solutions, the heat-resistant film may be bonded and fastened to the inlet. A material of the heat-resistant film may include but is not limited to a heat insulation material such as glass fiber, asbestos, or rock wool.

In some possible implementation solutions, a heat insulation pad may be disposed between adjacent battery cells, to reduce heat transfer between the battery cells, and reduce a risk of thermal runaway diffusion inside the battery module.

For example, the heat insulation pad may be, but is not limited to, glass fiber, asbestos, rock wool, aerogel blanket, a vacuum plate, or the like.

In some possible implementation solutions, the battery module may further include an insulation bracket, the insulation bracket may continuously cover battery covers of the plurality of battery cells, and the first exhaust pipe may be fastened to the insulation bracket, to improve convenience of mounting the first exhaust pipe in the housing.

In some possible implementation solutions, the insulation bracket may further include a boss that protrudes away from the battery cover, a bottom wall is disposed on a side that is of the boss and that faces the battery cover, the bottom wall may be disposed in contact with the battery cover, an avoidance hole is provided at a position that is of the bottom wall and that corresponds to the through hole of each battery cell, and the first exhaust pipe may be embedded in the boss and the bottom wall. This not only facilitates mounting and fastening of the first exhaust pipe, and but also facilitates electrical isolation between the battery cover and the first exhaust pipe by using the bottom wall, so as to improve use safety of the battery module.

In some possible implementation solutions, the heat-resistant film may be specifically disposed on an inner wall of the bottom wall, and is disposed to cover the avoidance hole.

In some possible implementation solutions, the insulation bracket may further include a first fastening part and a second fastening part that are located on two sides of the boss. A first terminal and a second terminal are disposed on the battery cover of each battery cell, the first fastening part is located on a side that is of the first terminal and that faces away from the battery cell, and a first hole is provided at a position that is of the first fastening part and that corresponds to the first terminal of each battery cell; and the second fastening part is located on a side that is of the second terminal and that faces away from the battery cell, and a second hole is provided at a position that is of the second fastening part and that corresponds to the second terminal of each battery cell. The battery module may further include a busbar. The busbar is disposed on a side that is of the insulation bracket and that faces away from the battery cover. The busbar may include a plurality of conductive parts, and each conductive part may be configured to electrically connect two adjacent battery cells. For the two adjacent battery cells, the conductive part may be electrically connected to a first terminal of one of the battery cells through a first hole, and electrically connected to a second terminal of the other battery cell through a second hole. In this way, the plurality of conductive parts may be used to connect the battery cells in the battery module in series.

In some possible implementation solutions, a material of the first exhaust pipe may be galvanized steel. The galvanized steel has strong corrosion resistance, and therefore can improve a service life of the first exhaust pipe.

According to a second aspect, this application further provides an energy storage cabinet, where the energy storage cabinet may include a cabinet body, a second exhaust pipe, and a plurality of battery modules in any one of the possible implementation solutions of the first aspect, and the plurality of battery modules and the second exhaust pipe are disposed in the cabinet body. The cabinet body may be provided with a second vent, the second exhaust pipe may communicate with an outside of the cabinet body through the second vent, and the second exhaust pipe communicates with a first vent of each battery module. In this way, after the battery cell in the battery module discharges the high-temperature gas to the first exhaust pipe, the high-temperature gas may be conveyed by the first exhaust pipe to the second exhaust pipe through the first air vent, and further discharged by the second exhaust pipe to the outside of the cabinet body through the second air vent. In this process, the high-temperature gas discharged by the battery modules in the energy storage cabinet is limited within the second exhaust pipe, and therefore heat transfer between the battery modules is limited. This can effectively reduce a risk of thermal runaway diffusion inside the energy storage cabinet.

In some possible implementation solutions, the second exhaust pipe may be provided with a connection pipe corresponding to the first air vent of each battery module, and the second exhaust pipe may communicate with each first air vent through the corresponding connection pipe. For example, an end of the connection pipe may be welded to the first vent of the corresponding battery module. Alternatively, a flange may be disposed at an end of the connection pipe, and the flange may be connected to a housing of the corresponding battery module through a fastener. In this case, a sealing ring may be disposed in a squeezing manner between the flange at the end of each connection pipe and the housing of the corresponding battery module, to reduce a risk of high-temperature gas leakage at a joint.

According to a third aspect, this application further provides an energy storage system. The energy storage system may include a container, a third exhaust pipe, and a plurality of energy storage cabinets in any one of the possible implementation solutions of the second aspect, and the plurality of energy storage cabinets and the third exhaust pipe are disposed in the container. The container may be provided with a third vent, the third exhaust pipe may communicate with an outside of the container through the third vent, and the third exhaust pipe communicates with a second vent of each energy storage cabinet. In this way, after the second exhaust pipe conveys high-temperature gas to the third exhaust pipe through the second air vent, the high-temperature gas may be further conveyed by the third exhaust pipe to the outside of the container through the third air vent. In this process, the high-temperature gas discharged by the energy storage cabinets in the container is limited within the third exhaust pipe, and therefore heat transfer between the energy storage cabinets is limited. This can effectively reduce a risk of thermal runaway diffusion in the container.

In some possible implementation solutions, the third exhaust pipe may include a main pipe and a plurality of subsidiary pipes. The plurality of subsidiary pipes are disposed in a one-to-one correspondence with the plurality of energy storage cabinets. One end of the subsidiary pipe communicates with the second air vent of the energy storage cabinet, the other end communicates with the main pipe, and the main pipe communicates with the third air vent. This design helps simplify a structure of the third exhaust pipe and reduce space occupied by the third exhaust pipe in the container.

### BRIEF DESCRIPTION OF DRAWINGS

FIG. 1 is a diagram of a thermal runaway process of a battery cell;
FIG. 2 is a diagram of a structure of a battery module according to an embodiment of this application;
FIG. 3 is a diagram of a cross-sectional structure of a battery cell according to an embodiment of this application;
FIG. 4 is a diagram of a structure of an energy storage cabinet according to an embodiment of this application; and
FIG. 5 is a diagram of a structure of an energy storage system according to an embodiment of this application.

### Reference numerals:

10-battery module; 11-housing; 111-first vent; 12-battery cell; 121-battery cover; 1211-through hole;
122-battery casing; 123-first terminal; 124-second terminal; 125-explosion-proof valve; 13-heat insulation pad; 14-insulation bracket;
141-first fastening part; 1411-first hole; 142-second fastening part; 1421-second hole; 143-boss;
1431-inner layer structure; 1432-outer layer structure; 144-bottom wall; 1441-avoidance hole; 15-busbar; 151-conductive part;
16-first exhaust pipe; 161-inlet; 162-heat-resistant film;
100-energy storage cabinet; 20-cabinet body; 21-second vent; 30-second exhaust pipe; 31-connection pipe;
1000-energy storage system; 200-container; 201-third vent; 300-third exhaust pipe; 310-main pipe;
320-subsidiary pipe.

### DESCRIPTION OF EMBODIMENTS

To make the objectives, technical solutions, and advantages of this application clearer, the following further describes embodiments of this application in detail with reference to the accompanying drawings. However, example implementations may be implemented in a plurality of forms, and should not be construed as being limited to implementations described herein. Identical reference numerals in the accompanying drawings represent identical or similar structures. Therefore, repeated descriptions thereof are omitted. Expressions of positions and directions in embodiments of this application are described by using the accompanying drawings as examples. However, changes may be also made as required, and all the changes fall within the protection scope of this application. The accompanying drawings in embodiments of this application are merely used to illustrate a relative position relationship and do not represent an actual scale.

It should be noted that specific details are set forth in the following descriptions to facilitate understanding of this application. However, embodiments of this application can be implemented in a plurality of manners different from those described herein, and a person skilled in the art can perform similar promotion without departing from the connotation of embodiments of this application. Therefore, this application is not limited to the specific implementations disclosed in the following.

An energy storage system is a device that may store electric energy by using a specific medium, and release the stored energy for electricity generation when necessary. The energy storage system may be used as a load balancing apparatus and a backup power supply in a data center, to supply power to electronic devices such as a server and a supercomputer, or may be used as a power source in a new energy vehicle, to provide power for traveling of the vehicle.

Using the energy storage system used in the data center as an example, the energy storage system may be usually disposed in a container or an equipment room, and may include a plurality of energy storage cabinets. Each energy storage cabinet may include a plurality of battery modules, and each battery module may be formed by connecting a plurality of battery cells in series. Lithium iron phosphate is commonly used for battery cells in the energy storage cabinet. There is a probability of a thermal runaway risk during use of the battery cells. The thermal runaway risk means phenomena of overheating, fire, and explosion that are caused by a heat release chain reaction of a battery cell in a cabinet and that occur after a sharp change of a temperature-rise rate of the battery. A cause of thermal runaway usually includes squeeze, needle puncture, short circuit, overcharging, overheating, and the like.

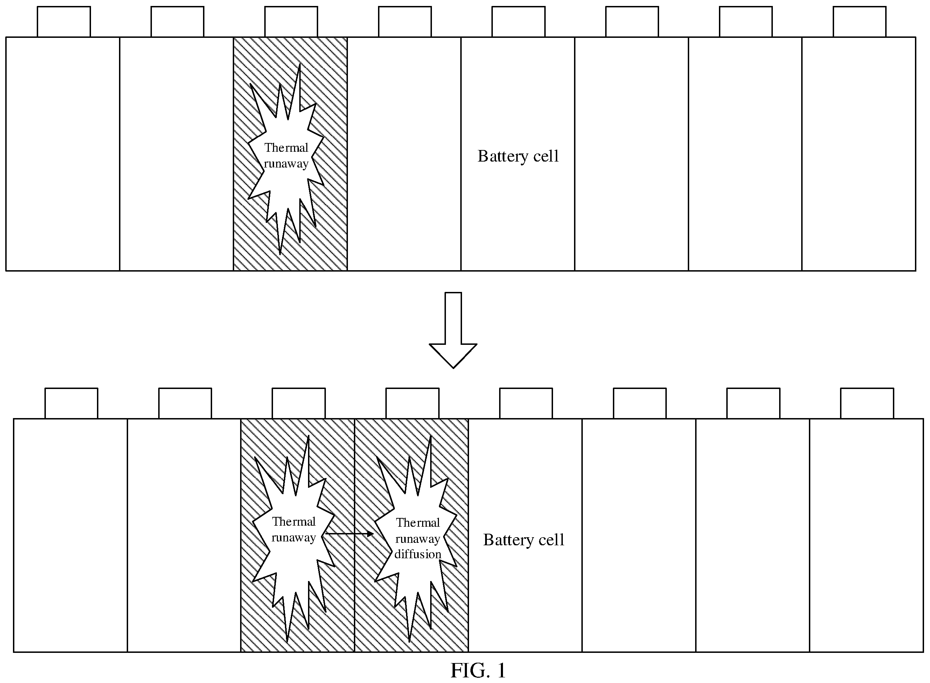

FIG. 1 is a diagram of a thermal runaway process of a battery cell. Currently, a thermal runaway diffusion prevention solution is basically not used for current lithium battery energy storage products. If thermal runaway occurs in one battery cell, heat is quickly transferred to an adjacent battery cell, causing thermal runaway to occur in the adjacent battery cell. Once heat is diffused, thermal runaway occurs in the entire battery module and even the entire energy storage cabinet in succession, seriously affecting use safety of the energy storage system.

For the foregoing problem, embodiments of this application provide a battery module, an energy storage cabinet, and an energy storage system, to reduce a risk of thermal runaway diffusion and improve use safety of the battery module. The following specifically describes, with reference to the accompanying drawings, a package structure provided in embodiments of this application.

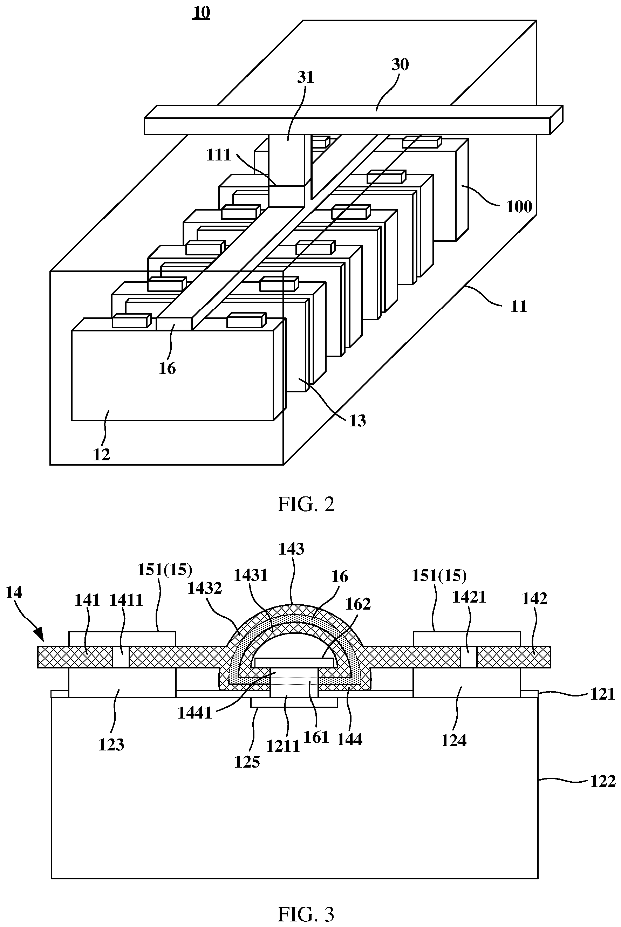

FIG. 2 is a diagram of a structure of a battery module according to an embodiment of this application. A battery module 10 may include a housing 11 and a plurality of battery cells 12, and the plurality of battery cells 12 are disposed in the housing 11. In some implementations, the plurality of battery cells 12 may be disposed in parallel in a length direction of the housing 11, and adjacent battery cells 12 may be separated by using a heat insulation pad 13, to reduce heat transfer between the battery cells 12 and reduce a risk of thermal runaway diffusion inside the battery module 10. For example, the heat insulation pad 13 may be, but is not limited to, glass fiber, asbestos, rock wool, aerogel blanket, a vacuum plate, or the like.

FIG. 3 is a diagram of a cross-sectional structure of a battery cell according to an embodiment of this application. With reference to both FIG. 2 and FIG. 3, the battery cell 12 may include a battery cover 121, a battery casing 122, and a jelly roll (not shown in the figure). The battery cover 121 and the battery casing 122 may be fixedly connected to form a sealed cavity, and the jelly roll is disposed in the sealed cavity. A first terminal 123 and a second terminal 124 may be disposed on the battery cover 121, where the first terminal 123 and the second terminal 124 may be a positive terminal and a negative terminal respectively. In this case, the first terminal 123 may be electrically connected to a positive terminal of the jelly roll, and the second terminal 124 may be electrically connected to a negative terminal of the jelly roll. In a specific implementation, the battery cover 121 may be provided with a first mounting hole and a second mounting hole, the first mounting hole and the second mounting hole separately run through the battery cover 121, the first terminal 123 may be electrically connected to the positive terminal of the jelly roll through the first mounting hole, and the second terminal 124 may be electrically connected to the negative terminal of the jelly roll through the second mounting hole. In addition, the battery cover 121 may be further provided with a liquid injection hole, and the liquid injection hole may run through the battery cover, to facilitate injection of an electrolyte into the battery cell through the liquid injection hole.

In addition, the battery module 10 may further include an insulation bracket 14 and a busbar 15. The insulation bracket 14 may be disposed on battery covers 121 of the plurality of battery cells 12, and the busbar 15 is disposed on a side that is of the insulation bracket 14 and that faces away from the battery cover 121. In a specific implementation, the insulation bracket 14 may include a first fastening part 141 disposed to cover the first terminal 123 of each battery cell 12, and a second fastening part 142 disposed to cover the second terminal 124 of each battery cell 12. A first hole 1411 is provided at a position that is of the first fastening part 141 and that corresponds to the first terminal 123 of each battery cell 12. A second hole 1421 is provided at a position that is of the second fastening part 142 and that corresponds to the second terminal 124 of each battery cell 12. The busbar 15 may include a plurality of conductive parts 151, and each conductive part 151 may be configured to electrically connect two adjacent battery cells 12. For the two adjacent battery cells 12, the conductive part 151 may be electrically connected to a first terminal 123 of one of the battery cells 12 through a first hole 1411, and electrically connected to a second terminal 124 of the other battery cell 12 through a second hole 1421. In this way, the plurality of conductive parts 151 may be used to connect the battery cells 12 in the battery module 10 in series.

For example, for the battery cell 12 shown in FIG. 3, a left conductive part 151 may be configured to electrically connect the first terminal 123 of the battery cell 12 to the second terminal 124 of a previous battery cell 12, and a right conductive part 151 may be configured to electrically connect the second terminal 124 of the battery cell 12 to the first terminal 123 of a next battery cell 12. In this case, the conductive part 151 may be approximately of a Z-shaped structure.

In a process of using the battery cell 12, because side reactions continuously occur between the electrolyte and the positive and negative terminals of the jelly roll, gas is generated. As described above, the inside of the battery cell 12 is the sealed cavity formed by the battery casing 122 and the battery cover 121. Therefore, with continuous accumulation of the gas, pressure inside the battery cell 12 increases continuously. To prevent a safety problem due to excessively high internal pressure of the battery cell 12, an explosion-proof valve 125 may be further disposed on the battery cover 121. When the battery cell 12 is faulty, and pressure inside the battery cell 12 is greater than opening pressure of the explosion-proof valve 125, the explosion-proof valve 125 is opened, to discharge the gas inside the battery cell 12, so as to reduce a temperature of the battery cell 12 and implement pressure relief, thereby preventing a more serious safety problem such as explosion of the battery cell 12.

When the explosion-proof valve 125 is mounted on the battery cover 121, the battery cover 121 may be provided with a through hole 1211 that enables communication between the inside of the battery cell 12 and the outside, and the explosion-proof valve 125 may be welded and fastened to a side surface of the battery cover 121, to block the through hole 1211. For example, the through hole 1211 may be located between the first terminal 123 and the second terminal 124. The explosion-proof valve 125 may be disposed on a side that is of the battery cover 121 and that faces the inside of the battery cell 12, or may be disposed on a side that is of the battery cover 121 and that faces away from the inside of the battery cell 12. This is not limited in this application, provided that the through hole 1211 can be blocked. In the embodiment shown in FIG. 3, an example in which the explosion-proof valve 125 is disposed on the side that is of the battery cover 121 and that faces the inside of the battery cell 12 is used for description.

Still with reference to FIG. 2 and FIG. 3, in some embodiments, the housing 11 may be provided with a first vent 111, and a first exhaust pipe 16 may be disposed in the housing 11. The first exhaust pipe 16 may communicate with an outside of the housing 11 through the first vent 111, and also communicate with the through hole 1211 provided on the battery cover 121 of each battery cell 12. After the explosion-proof valve 125 of the battery cell 12 is opened, the high-temperature gas inside the battery cell 12 may enter the first exhaust pipe 16 through the through hole 1211, and is further discharged to the outside of the housing 11 through the first exhaust pipe 16. For example, the first exhaust pipe 16 may be prepared by using a galvanized steel material with strong corrosion resistance, to improve a service life of the first exhaust pipe 16.

In a specific embodiment, the first exhaust pipe 16 may be provided with an inlet 161 communicating with the through hole 1211 of each battery cell 12, and the high-temperature gas in the battery cell 12 may enter the first exhaust pipe 16 through the through hole 1211 of the battery cover 121 and the corresponding inlet 161 in sequence. In addition, a heat-resistant film 162 may be disposed at each inlet 161 of the first exhaust pipe 16, and the heat-resistant film 162 may be disposed to cover the inlet 161. For example, the heat-resistant film 162 may be bonded and fastened to the inlet 161, and a material of the heat-resistant film 162 may include but is not limited to a heat insulation material such as glass fiber, asbestos, or rock wool.

It can be learned that, in this embodiment, the inside of the battery cell 12 is separated from the first exhaust pipe 16 through two barriers: the explosion-proof valve 125 and the heat-resistant film 162. In a specific implementation, opening pressure of the heat-resistant film 162 is less than the opening pressure of the explosion-proof valve 125. In this way, after the explosion-proof valve 125 is opened under the pressure inside the battery cell 12, the pressure definitely opens the heat-resistant film 162, so that the gas inside the battery cell 12 smoothly enters the first exhaust pipe 16. For the entire battery module 10, even if one or more battery cells 12 in the same battery module 10 are faulty and discharge gas to the first exhaust pipe 16, when the high-temperature gas in the first exhaust pipe 16 flows through a normal battery cell 12, due to a heat insulation function of the heat-resistant film 162, the high-temperature gas can be prevented from transferring heat to the normal battery cell 12 through the inlet 161, thereby reducing a risk of heat diffusion in the entire battery module 10, and improving use safety of the battery module 10.

In some possible embodiments, the first exhaust pipe 16 may extend in an arrangement direction of the battery cells 12, that is, extend in the length direction of the housing 11, so as to enable communication between the first exhaust pipe 16 and the through hole 1211 of each battery cell 12. In addition, the first vent 111 of the housing 11 may be provided on a side wall that is of the housing 11 and that faces the battery cover 121. In this case, the first exhaust pipe 16 is located between the battery cover 121 and the side wall of the housing 11, so as to enable communication between the first exhaust pipe 16 and the first vent 111..

Still with reference to FIG. 2 and FIG. 3, in this embodiment of this application, the first exhaust pipe 16 may be disposed on the insulation bracket 14, to improve convenience of mounting the first exhaust pipe 16 in the housing 11. In a specific implementation, the insulation bracket 14 may include a boss 143 that protrudes away from the battery cover 121. The boss 143 may extend in the length direction of the housing 11, and a bottom wall 144 is disposed on a side that is of the boss 143 and that faces the battery cover 121. In this way, the boss 143 and the bottom wall 144 may enclose a tubular structure, and the first exhaust pipe 16 may be embedded in the tubular structure. The bottom wall 144 may be disposed in contact with the battery cover 121 of each battery cell 12, and an avoidance hole 1441 may be disposed at a position that is of the bottom wall 144 and that corresponds to the through hole 1211 of each battery cell 12, so that the through hole 1211 communicates with the first exhaust pipe 16. In this case, the tubular structure formed by the boss 143 and the bottom wall 144 may be considered as a two-layer structure including an inner layer and an outer layer. The first exhaust pipe 16 is an interlayer located between an inner layer structure 1431 and an outer layer structure 1432. The heat-resistant film 162 may be specifically disposed on an inner wall of the bottom wall 144 and is disposed to cover the avoidance hole 1441. This design not only facilitates mounting and fastening of the first exhaust pipe 16, and but also facilitates electrical isolation between the battery cover 121 and the first exhaust pipe 16 by using the bottom wall 144, so as to improve use safety of the battery module 10.

In some possible embodiments, the insulation bracket 14 may wrap the first exhaust pipe 16 for shaping in an injection molding manner. In this way, not only reliability of connection between the insulation bracket 14 and the first exhaust pipe 16 can be improved, but also a subsequent assembly process can be omitted, so as to help simplify an overall preparation process of the battery module 10.

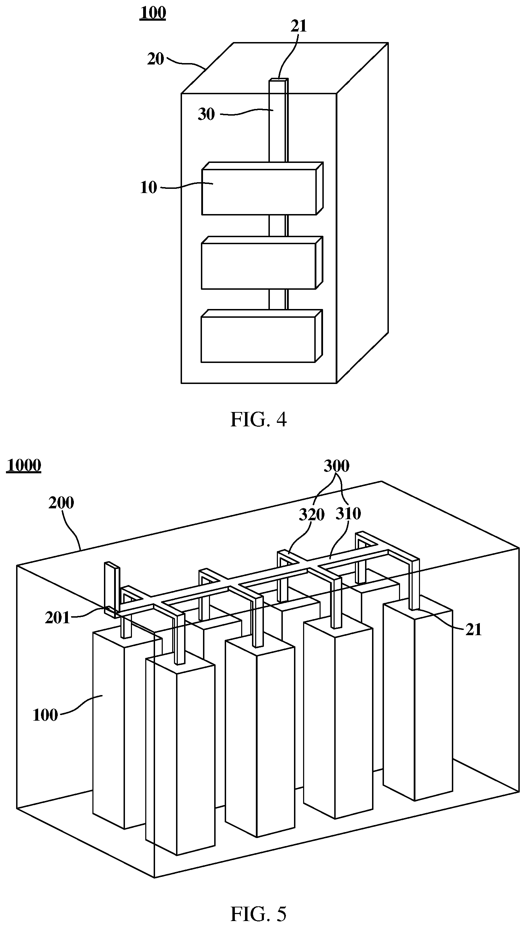

FIG. 4 is a diagram of a structure of an energy storage cabinet according to an embodiment of this application. With reference to both FIG. 2 and FIG. 4, an energy storage cabinet 100 may include a cabinet body 20 and a plurality of battery modules 10 described in the foregoing embodiment, and the plurality of battery modules 10 are disposed in the cabinet body 20. For example, the plurality of battery modules 10 may be disposed in parallel in a height direction of the cabinet body 20. The cabinet body 20 may be provided with a second vent 21, and a second exhaust pipe 30 may be further disposed in the cabinet body 20. The second exhaust pipe 30 may communicate with an outside of the cabinet body 20 through the second vent 21, and also communicate with the first vent 111 of each battery module 10. For example, a material of the second exhaust pipe 30 may also be galvanized steel.

In this embodiment, after the battery cell 12 in the battery module 10 discharges the high-temperature gas to the first exhaust pipe 16, the high-temperature gas may be conveyed by the first exhaust pipe 16 to the second exhaust pipe 30 through the first vent 111, and further discharged by the second exhaust pipe 30 to the outside of the cabinet body 20 through the second vent 21. In this process, the high-temperature gas discharged by the battery modules 10 in the energy storage cabinet 100 is limited within the second exhaust pipe 30, and therefore heat transfer between the battery modules 10 is limited. This can effectively reduce a risk of thermal runaway diffusion inside the energy storage cabinet 100.

In a specific implementation, the second exhaust pipe 30 may extend in an arrangement direction of the battery modules 10, that is, extend in a length direction of the cabinet body 20, so as to enable communication between the second exhaust pipe 30 and the first vent 111 of each battery module 10. In addition, a connection pipe 31 corresponding to the first vent 111 of each battery module 10 in the cabinet body 20 may be disposed on the second exhaust pipe 30, and the connection pipe 31 may be welded to the first vent 111 of the corresponding battery module 10, so as to enable communication between the first vent 111 and the second exhaust pipe 30 through the corresponding connection pipe 31.

Alternatively, in some other embodiments, a flange may be further disposed at an end of the connection pipe 31, and the flange may be connected to the housing 11 of the corresponding battery module 10 through a fastener, so that the second exhaust pipe 30 is relatively fastened to each battery module 10, and the second exhaust pipe 30 communicates with the first vent 111 of each battery module 10. In this case, a sealing ring may be disposed in a squeezing manner between the flange at the end of each connection pipe 31 and the housing 11 of the corresponding battery module 10, to reduce a risk of high-temperature gas leakage at a joint. For example, the sealing ring may be made of a high-temperature-resistant and anti-corrosion material, including but not limited to rubber, graphite, asbestos, and the like.

FIG. 5 is a diagram of a structure of an energy storage system according to an embodiment of this application. The energy storage system 1000 may include a container 200 and a plurality of energy storage cabinets 100 described in the foregoing embodiment, where the plurality of energy storage cabinets 100 are disposed in the container 200. For example, the plurality of energy storage cabinets 100 may be disposed in an array in the container 200. FIG. 5 shows a case in which the plurality of energy storage cabinets 100 are arranged in four rows and two columns. It should be understood that, a quantity and an arrangement manner of the energy storage cabinets 100 in FIG. 5 are merely used as an example, and do not constitute a limitation on an internal structure of the energy storage system 1000.

The container 200 may be provided with a third vent 201, and a third exhaust pipe 300 may be further disposed in the container 200. The third exhaust pipe 300 may communicate with an outside of the container 200 through the third vent 201, and also communicate with the second vent 21 of each energy storage cabinet 100. For example, a material of the third exhaust pipe 300 may also be galvanized steel. In this design, after the battery cell in the battery module discharges the high-temperature gas to the first exhaust pipe, the high-temperature gas may be conveyed by the first exhaust pipe to the second exhaust pipe through the first vent, further conveyed by the second exhaust pipe to the third exhaust pipe 300 through the second vent 21, and finally discharged by the third exhaust pipe 300 to the outside of the container 200 through the third vent 201. In this process, the high-temperature gas discharged by the energy storage cabinets 100 in the container 200 is limited within the third exhaust pipe 300, and therefore heat transfer between the energy storage cabinets 100 is limited. This can effectively reduce a risk of thermal runaway diffusion in the container 200.

In a specific implementation, the third exhaust pipe 300 may include a main pipe 310 and a plurality of subsidiary pipes 320. The plurality of subsidiary pipes 320 are disposed in a one-to-one correspondence with the plurality of energy storage cabinets 100. One end of the subsidiary pipe 320 communicates with the second vent 21 of the energy storage cabinet 100, the other end communicates with the main pipe 310, and the main pipe 310 communicates with the third vent 201. This design helps simplify a structure of the third exhaust pipe 300 and reduce space occupied by the third exhaust pipe 300 in the container 200. In this case, the high-temperature gas discharged from the energy storage cabinets 100 may be gathered to the main pipe 310 through the subsidiary pipes 320 respectively corresponding to the energy storage cabinets 100, and finally discharged from the third vent 201.

In some embodiments, the subsidiary pipe 320 may be welded to the second vent 21 of the corresponding energy storage cabinet 100, to implement communication between the third exhaust pipe 300 and the second vent 21. Alternatively, in some other embodiments, a flange may be disposed at an end that is of the subsidiary pipe 320 and that is away from the main pipe 310, and the flange may be securely connected to the cabinet body of the corresponding energy storage cabinet 100 through a fastener, so that the third exhaust pipe 300 is relatively fastened to each energy storage cabinet 100, and the third exhaust pipe 300 communicates with the second vent 21 of each energy storage cabinet 100. In this case, a sealing ring may be disposed in a squeezing manner between the flange at the end of each subsidiary pipe 320 and the cabinet body of the corresponding energy storage cabinet 100, to reduce a risk of high-temperature gas leakage at a joint. Similarly, the sealing ring herein may also be made of a high-temperature-resistant and anti-corrosion material such as rubber, graphite, or asbestos.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery module, comprising a housing, and a plurality of battery cells and a first exhaust pipe that are disposed in the housing, wherein
the housing is provided with a first vent;
the battery cell comprises a battery cover and an explosion-proof valve, the battery cover is provided with a through hole, and the explosion-proof valve is configured to block the through hole; and
the first exhaust pipe communicates with an outside of the housing through the first vent, the first exhaust pipe is provided with an inlet communicating with the through hole of each battery cell, each inlet is covered with a heat-resistant film, and opening pressure of the heat-resistant film is less than opening pressure of the explosion-proof valve.

2. The battery module according to claim 1, wherein a heat insulation pad is disposed between adjacent battery cells.

3. The battery module according to claim 1 or 2, wherein the battery module further comprises an insulation bracket, the insulation bracket continuously covers battery covers of the plurality of battery cells, and the first exhaust pipe is fastened to the insulation bracket.

4. The battery module according to claim 3, wherein the insulation bracket comprises a boss that protrudes away from the battery cover, a bottom wall is disposed on a side that is of the boss and that faces the battery cover, the bottom wall is disposed in contact with the battery cover, and an avoidance hole is provided at a position that is of the bottom wall and that corresponds to the through hole; and
the first exhaust pipe is embedded in the boss and the bottom wall.

5. The battery module according to claim 4, wherein the heat-resistant film is disposed on an inner wall of the bottom wall, and the heat-resistant film covers the avoidance hole.

6. The battery module according to any one of claims 3 to 5, wherein the insulation bracket further comprises a first fastening part and a second fastening part that are located on two sides of the boss;
a first terminal and a second terminal are disposed on the battery cover of each battery cell, the first fastening part is located on a side that is of the first terminal and that faces away from the battery cell, a first hole is provided at a position that is of the first fastening part and that corresponds to the first terminal of each battery cell, the second fastening part is located on a side that is of the second terminal and that faces away from the battery cell, and a second hole is provided at a position that is of the second fastening part and that corresponds to the second terminal of each battery cell; and
the battery module further comprises a busbar, the busbar is disposed on a side that is of the insulation bracket and that faces away from the battery cover, the busbar comprises a plurality of conductive parts, each conductive part is configured to electrically connect two adjacent battery cells, the conductive part is electrically connected to a first terminal of one of the battery cells through the first hole, and the conductive part is electrically connected to a second terminal of the other battery cell through the second hole.

7. The battery module according to any one of claims 1 to 6, wherein a material of the first exhaust pipe is galvanized steel.

8. An energy storage cabinet, comprising a cabinet body, and a plurality of battery modules according to any one of claims 1 to 7 and a second exhaust pipe that are disposed in the cabinet body, wherein
the cabinet body is provided with a second vent; and
the second exhaust pipe communicates with an outside of the cabinet body through the second vent, and the second exhaust pipe communicates with a first vent of each battery module.

9. The energy storage cabinet according to claim 8, wherein the second exhaust pipe is provided with a connection pipe corresponding to the first vent of each battery module, and the second exhaust pipe communicates with each first vent through the corresponding connection pipe; and
an end of the connection pipe is welded to the first vent of the corresponding battery module; or
a flange is disposed at an end of the connection pipe, and the flange is connected to a housing of the corresponding battery module through a fastener.

10. An energy storage system, comprising a container, and a plurality of energy storage cabinets according to claim 8 or 9 and a third exhaust pipe that are disposed in the container, wherein
the container is provided with a third vent; and
the third exhaust pipe communicates with an outside of the container through the third vent, and the third exhaust pipe communicates with a second vent of each energy storage cabinet.
